# EUROPEAN PATENT APPLICATION

(11) **EP 1 406 156 A1**
(43) Date of publication of application: **07.04.2004**
(21) Application number: 02396148.5
(22) Date of filing: 03.10.2002
(51) Int. Cl.: G06F 3/023, G06F 17/60

(54) **Method for activation of the wallet program in an internet terminal and an internet terminal**

(71) Applicant: Nokia Corporation, 02150 Espoo (FI)
(72) Inventor: Veteläinen, Altti, 90900 Kiiminki (FI)
(74) Representative: Brax, Matti Juhani

(57) **Abstract**

The invention relates to a method for starting a wallet program on an Internet terminal and an application and terminal utilized in the method. When the user of a terminal opens a web page on the display (10) of his/her terminal, it is automatically checked whether that web page supports the standard associated with the wallet program used at the terminal. If it is found out that the web page supports the standard in question, a wallet icon (24) is brought onto the display for starting the wallet program. The user of the terminal can then start the wallet program simply from the wallet icon brought onto the display. The wallet icon simultaneously serves as an indication to the user that the web page opened supports the standard used by the wallet program whereby automatic information transfer through the wallet program to the web page is possible. Advantageously the wallet program at the terminal is a wallet program complying with the ECML (Electronic Commerce Modeling Language) standard. The method according to the invention is implemented with an application at an Internet terminal with a means for determining the standards supported by the Internet page opened on the display of the terminal and for bringing a wallet icon onto the display of the terminal. In a preferred embodiment of the invention the application is part of the Internet browser of the terminal.

## Description

The invention relates to a method for starting a wallet program on an Internet terminal for transferring from the terminal data stored electronically in the wallet program to an Internet page opened on the display screen of the terminal. The invention further relates to an application and terminal utilized in the method.

Nowadays, various products and services can be bought direct via web sites maintained by manufacturers or retailers of products. For long it has been possible to practice electronic commerce on personal computers connected to the Internet via a wired or wireless network. Lately, mobile phones with Internet functionality have appeared on the market, facilitating electronic commerce through mobile phone. Products are usually paid for with some kind of payment card, in which case the ID information of the payer and the payment card information are transferred from the buyer to the seller in conjunction with the payment transaction. The data are transferred using a form on a web page, on which form the buyer enters the data required by the seller. The data usually required on such a form include at least the buyer's name, payment card number, issue and expiry date of payment card and possibly other information such as phone number, postal address and e-mail address. The filling-in of such a form slows down the payment transaction and, being laborious, reduces the consumers' willingness to buy products.

So-called wallet programs have been developed in order to facilitate the transfer of payment transaction data to terminals such as computers and mobile phones. A wallet program is usually attached to a browser application on an Internet terminal. A wallet means a password-protected area on a terminal, in which area the user is able to electrically store information concerning bank cards, credit cards and customer cards as well as ordinary address information and numerical data, for example. There exists an open Internet standard (IETF RFC 2706) ECML (Electronic Commerce Modeling Language) for wallet programs and electronic commerce. A wallet program makes the transfer of payment transaction data considerably easier as the customer can automatically send all the necessary account information from the terminal to the vendor's web page. This way the customer won't have to tediously fill in the form.

There are, however, drawbacks related to the use of a wallet program. To open a wallet program, the tool bar of the web browser on the terminal should contain an appropriate icon. This icon naturally takes up space that would be needed for other icons on the tool bar. This is a problem especially in wireless terminals such as mobile phones where the tool bar, because of the limited size of the display, can only hold a few icons.

Furthermore, not all web pages support the ECML standard, in which case the automatic data transfer based on ECML fields in a wallet program cannot be utilized. However, the user will notice this only after he/she has opened the program and entered the password. Then the user will have to enter the required information on the web page manually, although he/she was prepared for automatic information transfer.

An object of the invention is to introduce a new method for starting a wallet program on an Internet terminal. With the method according to the invention and terminal and application used in the method it is possible to significantly alleviate the drawbacks and disadvantages associated with methods according to the prior art.

The method, terminal and application according to the invention are characterized in that which is specified in the independent claims. Some preferred embodiments of the invention are presented in the dependent claims.

The underlying idea in the method according to the invention is that as soon as the user of a terminal opens a web page on the display of his/her terminal, it is automatically checked whether that web page supports the standard associated with the wallet program used at the terminal. If it is found out that the web page opened on the display supports the standard in question, a wallet icon is brought onto the display for starting the wallet program. The user of the terminal can then start the wallet program simply from the wallet icon brought onto the display. The wallet icon simultaneously serves as an indication to the user that the web page opened supports the standard used by the wallet program whereby automatic information transfer through the wallet program to the web page is possible.

In a preferred embodiment of the invention the wallet program at the terminal is a wallet program complying with the ECML (Electronic Commerce Modeling Language) standard.

The underlying idea in an Internet terminal according to the invention is that the terminal includes an application to examine which standards a web page opened on the display of the terminal supports and to bring a wallet icon onto the display of the terminal for opening a wallet program.

In a preferred embodiment of the Internet terminal according to the invention the application is part of the Internet browser of the terminal.

An advantage of the method and system according to the invention is that it frees up space on the tool bar of the browser for other applications.

Another advantage of the invention is that it adds to the user-friendliness of the browser by automatically indicating whether a page displayed by the browser supports the wallet software in the browser.

A further advantage of the invention is that it saves time for the buyer by reducing the number of unnecessary attempts to launch the wallet application.

The invention is described in detail below. The description refers to the accompanying drawings in which
- Fig. 1: shows as an example a view of the display of an Internet terminal according to the invention when using the method according to the invention, and
- Fig. 2: shows as an example a second view of the display of an Internet terminal according to the invention when using the method according to the invention.

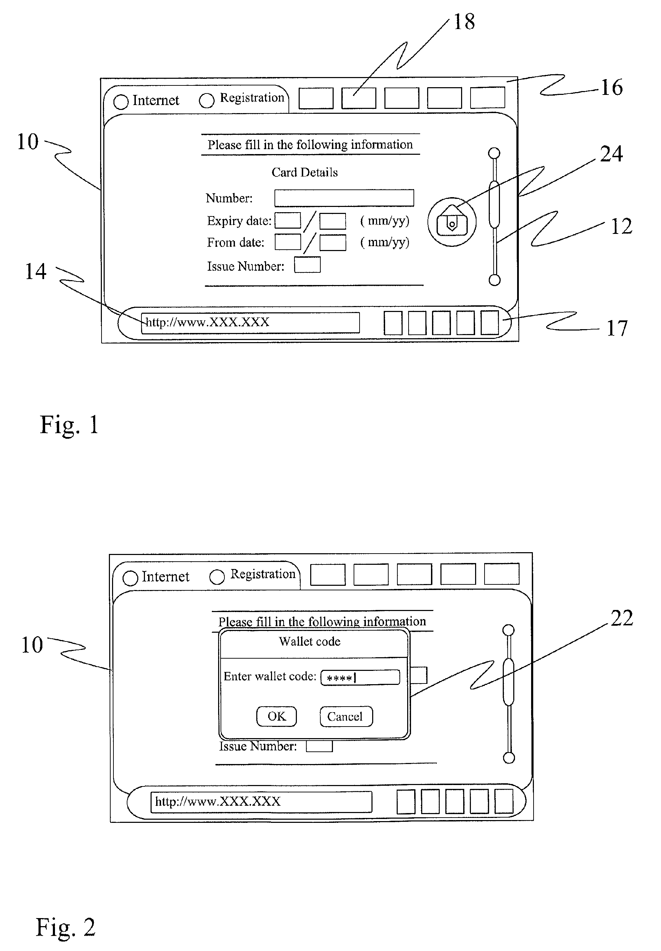

Fig. 1 shows, as an example, part of an Internet terminal according to the invention which terminal includes a web browser and utilizes the method according to the invention. Only the display 10 is shown of the terminal, because the essential things from the invention standpoint are best illustrated through the terminal's display. The terminal may be a normal computer or some other terminal. It may be a terminal with a touch display or it may be equipped in a known manner with a pointing device such as a mouse. Advantageously the terminal is a wireless terminal such as a mobile phone. Fig. 1 outlines the most important parts from the browser operation standpoint, i.e. the scroll bar 12, address box 14 and the tool button rows 16, 17. Functions which are the most essential and most common in browser use, are arranged such that they can be activated by "pressing" special tool buttons 18 placed in tool button rows. Pressing a button means in this description that the pointer of the browser is moved onto the button and an action is carried out with the pointer such that a function associated with that button is executed. The address box 14 displays the URL (address) of the page opened in the browser, and the scroll bar 12 is used for scrolling the page up and down on the display of the terminal. The contents of the page opened are displayed in the center region of the display. In the case depicted in Fig. 1, a page has been opened on the display which includes a form for entering payment card information. The browser further includes a menu which contains all the functions needed in the use of the browser software. Utilization of menus in browser software is well known from the prior art, so it is not discussed in more detail in this description. The appearance of the browser may differ from that presented in Fig. 1, and it may also include other parts in addition to those mentioned above.

In addition to the browser software, the terminal according to the invention also includes a wallet program in which the user has stored various data in electronic form. The wallet program may be a separate program installed on the terminal, or it may be part of the browser software of the terminal. Information stored in the wallet program may include e.g. bank card, credit card and customer card data as well as various address and numerical information. Advantageously the wallet program is a wallet program complying with the open Internet standard ECML (Electronic Commerce Modeling Language). The wallet program can be started in the normal manner from a menu in the browser, whereby a dialog window 22 is opened on the display (Fig. 2).

In the method according to the invention it is checked, immediately after a web page has been opened on the display 10, whether the page supports the Internet standard used by the wallet software of the terminal. If it is found out that the page supports the standard in question, a "floating" wallet icon 24 is brought onto the display of the terminal. A floating icon means in this description that the icon is opened and placed somewhere on the display 10, "on top" of the opened web page. The appearance of the wallet icon on the display serves as an indication to the user of the terminal that he/she can use the wallet software to transfer information to the opened page on the browser. Then the user can start the wallet software in the usual manner simply by "pressing" the wallet icon.

In practice the method according to the invention is implemented by means of an application residing in the memory of an Internet terminal, which application carries out the above-described functions associated with the method according to the invention. The application may be a stand-alone program installed on the terminal, or advantageously it can be part of the browser software of the terminal.

Fig. 2 shows, as an example, a view of the display of the terminal after the user has started the wallet program from the wallet icon 24. A dialog window 22 will then pop up on the display, prompting for the user's password for the wallet program. When the user gives his/her password in the password field and presses the OK button, he/she will be able to automatically send the required information, which has been stored in the wallet software, to the vendor's web page. When the information has been sent, the window closes. As usual, the window also includes a Cancel button for canceling the operation.

Instead of using a floating wallet icon, the wallet program can naturally be opened from a browser menu in the usual manner. To that end the browser menu includes a menu item from which the program can be started. This option can be used e.g. when a web page does not support the wallet software standard, in which case the wallet icon will not be displayed. The user is then able to open the wallet application through the menu, get the information required and enter it manually onto the web page. The user can also choose whether he/she wants to use the automatic floating wallet icon at all. For this, the application according to the invention can be completely switched off when required so that the wallet icon will not be displayed even if the page opened supported the wallet software standard.

The application according to the invention can be realized using any suitable programming language that can be used for programming web pages. The transfer of data, especially bank account transactions, through browser software may advantageously be accompanied by various identification, authentication and encryption functions to ensure secure transfer of information from the buyer to the vendor.

Preferred embodiments of the method, terminal and application according to the invention were described above. The invention is not limited to the solutions described above, but the inventional idea can be applied in numerous ways within the scope defined by the claims attached hereto.

## Claims

1. A method for starting a wallet program at an Internet terminal for transferring from the terminal data stored electronically in the wallet program to an Internet page opened on the display screen (10) of the terminal, **characterized in that** the method comprises steps to
- examine whether the Internet page opened on the display screen (10) of the terminal supports the standard according to the wallet program of the terminal,
- arrange a wallet icon (24) on the display screen (10) of the terminal for starting the wallet program if the Internet page opened supports the standard of the wallet program, and
- start the wallet program from said wallet icon (24).

2. A method according to claim 1, **characterized in that** said wallet program is a wallet program complying with the ECML (Electronic Commerce Modeling Language) standard.

3. A method according to claim 1 or 2, **characterized in that** the wallet program is started for transferring account transaction information, such as payment card information, from the buyer to a vendor's Internet page.

4. An Internet terminal with an Internet browser program and wallet program for storing information in electronic form on the terminal and for transferring information from the terminal to an Internet page opened on the display screen (10) of the terminal, **characterized in that** the terminal further includes an application for determining the standards supported by the Internet page opened on the display screen (10) of the terminal and bringing a wallet icon (24) onto the display screen of the terminal for opening the wallet program.

5. An Internet terminal according to claim 4, **characterized in that** said wallet program is a wallet program complying with the ECML (Electronic Commerce Modeling Language) standard.

6. An Internet terminal according to claim 4 or 5, **characterized in that** said terminal is a wireless terminal such as a mobile phone.

7. An Internet terminal according to any of claims 4 to 6, **characterized in that** said application is part of the Internet browser software of the terminal.

8. An application at an Internet terminal having an Internet browser program and wallet program for storing information in electronic form on the terminal and for transferring information from the terminal to an Internet page opened on the display screen (10) of the terminal, **characterized in that** it comprises
- a means for determining the standards supported by the Internet page opened on the display screen (10) of the terminal, and
- a means for bringing a wallet icon (24) onto the display screen (10) of the terminal for opening the wallet program.

9. An application according to claim 8, **characterized in that** said wallet program is a wallet program complying with the ECML (Electronic Commerce Modeling Language) standard.

10. An application according to claim 8 or 9, **characterized in that** it further comprises an option for enabling and disabling the application.

11. An application according to any of claims 8 to 10, **characterized in that** it is part of the Internet browser software of the terminal.
